Europäisches Patentamt

**European Patent Office** (11) Publication number: **0 076 662**

Office européen des brevets **A1**

(12) **EUROPEAN PATENT APPLICATION**

(21) Application number: **82305233.7**

(22) Date of filing: **01.10.82**

(51) Int. Cl.³: **B 60 P 1/64**
**F 16 M 11/20**

(30) Priority: **02.10.81 GB 8129798**

(43) Date of publication of application:
**13.04.83 Bulletin 83/15**

(84) Designated Contracting States:
**AT BE CH DE FR IT LI NL SE**

(71) Applicant: **Econ Machinery Limited**
**Bondgate**
**Ripon North Yorkshire HG4 1QD(GB)**

(72) Inventor: **Lupton, William George**
**Lupat Grange Palace Road**
**Ripon North Yorkshire HG4 1UW(GB)**

(74) Representative: **Corfield, Peter Ralph et al,**
**Marks & Clerk Alpha Tower Suffolk Street Queensway**
**Birmingham B1 1TT(GB)**

(54) **Interchangeable vehicle body arrangement.**

(57) An interchangeable vehicle body arrangement whereby different vehicle bodies (12) can be mounted on a wheeled chassis (10), in which a ram (16) or other means is used to raise the forward end of the body (12) and the body pivots about a rear pivot at (15), the arrangement for dismounting the body comprising releasing the pivot at (15), raising the body forward end so that the rear end of the body rests on a fixed support structure (17), then fitting front legs (18) to the front end of the body and lowering it onto them, so that upon release of the ram (16) the body is supported clear of the chassis (10), which can then be driven away.

Fig.2.

Croydon Printing Company Ltd.

EP 0 076 662 A1

This invention relates to arrangements for enabling vehicle bodies to be changed on a wheeled chassis. In the commercial vehicle field there are many types of tipping vehicle bodies including gritters, gulley emptiers, tankers or other types of load carrying or working apparatus.

It is sometimes necessary to change the body on a vehicle chassis from one type to another or from one to another of the same type of body. It is usual to provide elaborate jacking systems to lift the body clear of the chassis, which is then driven away from beneath the body and the reverse procedure is adopted for engaging the body on another chassis or for enabling the first chassis to take on another body.

In one system a body, such as a gritter body is arranged to be mounted on a normal load carrying vehicle body. The gritter body is mounted by supporting it on removable legs and the vehicle is driven under it so that upon lowering, the gritter body becomes wholly supported on the vehicle. Jacks are used to mount and dismount the gritter body. In another system bodies are lifted loaded and unloaded by sliding from the rear of the vehicle chassis. This involves a crane mechanism on the vehicle chassis and this is conveniently powered from the vehicle power unit.

It is the object of this invention to provide an interchangeable vehicle body arrangement which is simple in construction and easy to use. Conveniently the mounting and dismounting of a vehicle body may be carried out by one operator.

According to the invention there is provided an interchangeable vehicle body arrangement, applicable to a vehicle having a wheeled chassis, a body engageable on the chassis about a pivot near the rear end of the chassis, means for engagement with the body to lift the forward end thereof, characterised by a support arranged to be positioned at or near the rear of the vehicle with pivot means at a position spaced from the said body to chassis pivot said support having a locating means thereon to engage the body at or near the rear end thereof and support members near the forward end of the vehicle body on which said forward end can be supported clear of the chassis.

It is another object of the invention to provide a system of interchanging vehicle bodies on a chassis, in a particularly simple manner which can be very conveniently used, for example by only one operator.

The invention also resides in a system of interchanging vehicle bodies on a chassis applicable to a vehicle having a wheeled chassis, a body engageable on the chassis about a pivot near the rear end of the chassis, and means for lifting the forward end of the body, the system for removing the body from the chassis comprising releasing the pivot connecting the body with the chassis, positioning a support at or near the rear of the vehicle, raising the forward end of the body by the said means, allowing the rear of the body to rest on the support, pivot means enabling the body to pivot relatively to the support, further raising the body at its forward end to lift the body clear of the rear end of the chassis, placing support members under the front of the body, disengaging the forward end of the body from said means so that it rests on the support members, and then removing the vehicle chassis from below the body, the loading of a body onto a chassis being by the reverse procedure.

Although reference has been made to a wheeled chassis, it is to be understood that this expression is also intended to cover vehicles with tracks or other ground engaging elements.

The invention will now be described by way of example with reference to the accompanying drawings in which;

Figure 1 is a side elevation view of a vehicle with a gritter body, this being shown in the normal travelling position and in the tipped position,

Figure 2 is a similar view showing the body supported clear of the vehicle chassis,

Figure 3 is a perspective view showing parts of the rear of the vehicle and support structure constructed in accordance with the invention,

Figure 4 is a similar view to Figure 3 with the parts in positions corresponding to partial raising of the body from the chassis.

Figure 5 is a plan view showing support structure for the vehicle body,

Figure 6 is a perspective view of the front of the body shown supported and without the chassis,

Figure 7 is a view of one of the front legs, and

Figure 8 is a perspective view of the front of the body showing the connection for the lifting ram.

Figure 9 is a perspective view pf a further alternative construction.

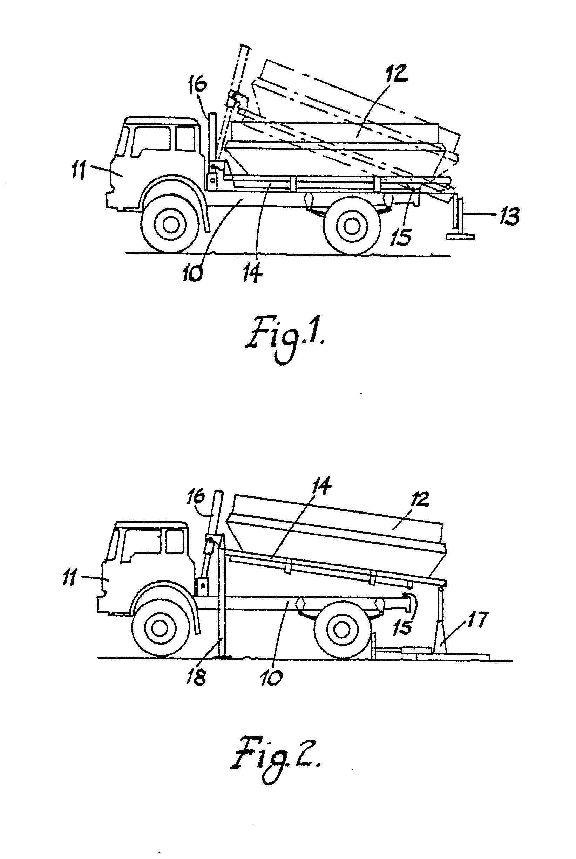

Figures 1 and 2 show a vehicle having a wheeled chassis 10 with a drivers cab 11 at the front. As shown in Figure 1 there is mounted on the chassis a body 12 which in the example shown is a gritter. This comprises a container for grit and salt or other suitable material and at the rear of this body there is a distributor indicated at 13. In an alternative arrangement (not shown) the distributor is mounted at one side of the vehicle and is therefore able to distribute grit forwardly as well as rearwardly of the vehicle. This is useful where the gritter vehicle chassis has four wheel drive. The body container is mounted on a sub frame 14 which is itself mounted on the vehicle chassis 10. The body 12 is capable of being tipped as indicated in Figure 1 from the horizontal position to an upwardly inclined position such tipping taking place about the axis of a pivot 15 situated near the rear of the vehicle chassis. To tip the body there is a ram 16 mounted behind the drivers cab 11 and this is hydraulically operated deriving power from the vehicle engine. The pivot 15 is removable so that the body can be dismounted. In certain constructions there is no separate subframe but the body is mounted directly onto the chassis.

Figure 2 shows the body in the dismounted condition in which the forward end has been raised by means of the ram 16 and the rear end is supported on a support structure indicated generally at 17. The pivot 15 has been released as will be described and the body front end is supported on legs 18.

Upon release of the ram 16 from the front of the body 12 the vehicle chassis can be driven away from beneath the body leaving it supported in the manner shown in Figure 2.

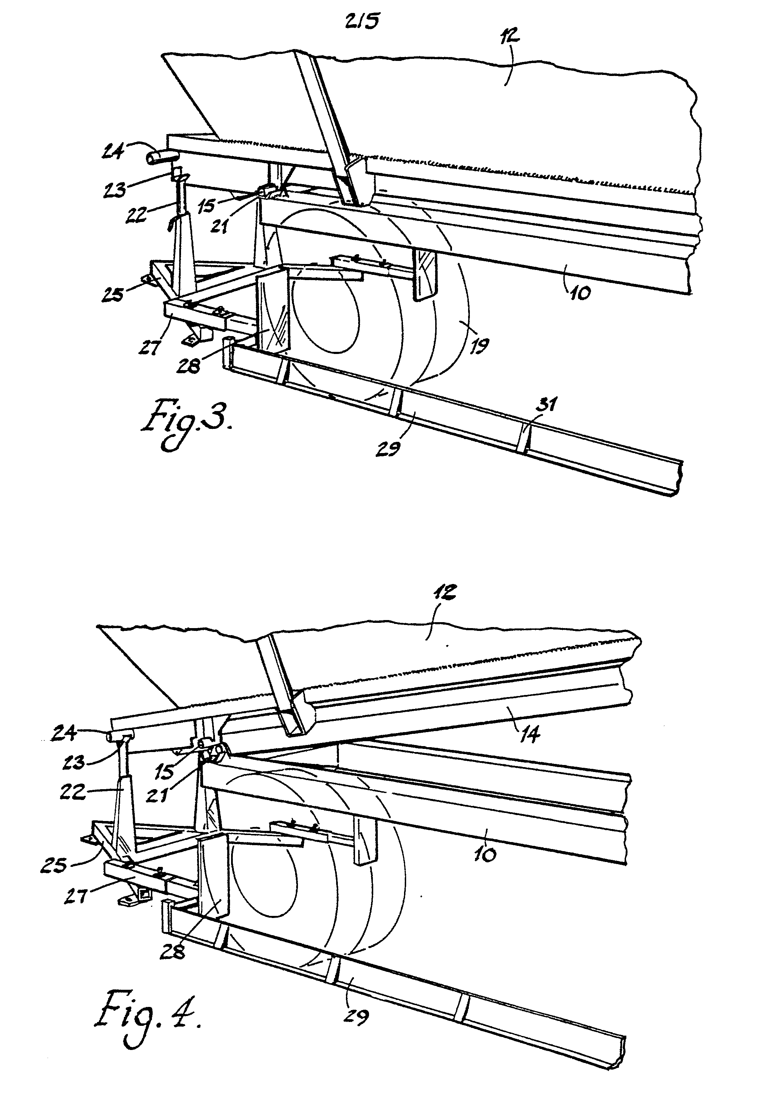

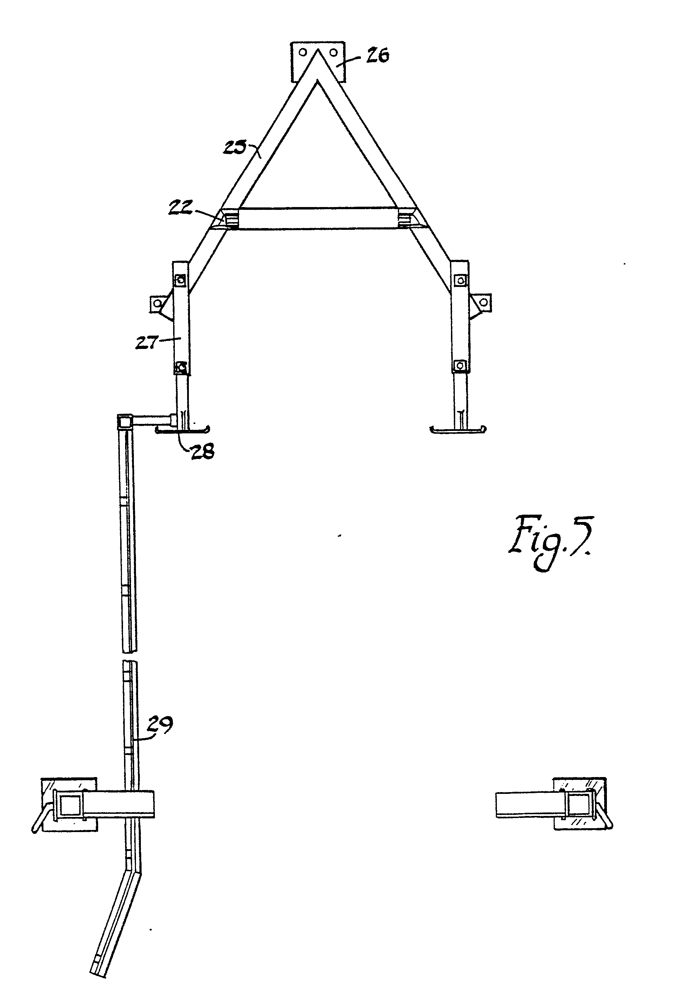

In Figures 3 and 4 there are shown portions of the rear of the vehicle in greater detail. The container and sub frame 14 of the body are shown in their normal lowered position on the vehicle chassis 10. The rear wheels of the vehicle are indicated at 19. The pivot 15 is positioned close to the rear of the chassis 10 and comprises a pair of sockets one on each side of the body these being aligned with respective sockets formed on the chassis 10. Interconnecting all the sockets is a removable pivot bar (not seen) which can be withdrawn. To permit withdrawal of the pivot bar the sockets on the body sub frame 14 are cradled in respective trunnions 21 on the chassis 10. The pivot bar is removed with the aid of a sliding hammer of known kind and is secured in place by a locking pin or other fastening (not shown). Single pivot constructions may be substituted in some cases. Also shown in Figure 3 is a support structure including a pair of upright adjustable support members 22. At the upper end of each of these is a trunnion 23 to receive a bar 24 projecting from the sub frame 14 of the vehicle body near the rear end thereof. The upright supports 22 are mounted on a frame 25 which rests on the ground. This is of generally triangular configuration as shown particularly in Figure 5 and may include a plate 26 by means of which it is securable in position on the ground. A single support member may be used, with suitable modification of the associated body of the vehicle.

The support structure also includes forward extensions 27 carrying abutment plates 28. These extensions 27 are adjustable in length and are arranged to provide abutments for the rear wheels 19 of the vehicle. Adjustment may be necessary to accomodate different vehicle sizes.

It may be necessary to detach the projecting bars 24 where these would be in the way of equipment related to the normal use of the vehicle. One convenient arrangement includes a pair of sockets on the subframe 14 or directly on the body, as the case may be, the sockets being to accept detachable members carrying the respective bars 24 to engage the trunnions 23.

Secured to one of the forward extensions 27 is a guide bar 29 which projects forwardly as shown particularly in Figures 3, 4 and 5. This is securable to the ground by means of spikes passing through sockets 31 in the guide bar and is intended to enable the vehicle driver to reverse the vehicle accurately into position against the abutment plates 28 and so that the bars 24 will be positioned accurately above the trunnions 23 on the upright support members 22.

Figure 4 shows the body 12 raised from the chassis 10 after release of the pivot bar from the pivot 15. The bars 24 at the rearmost end of the sub frame 14 of the vehicle body are shown resting in the trunnions 23 on the upright support members 22.

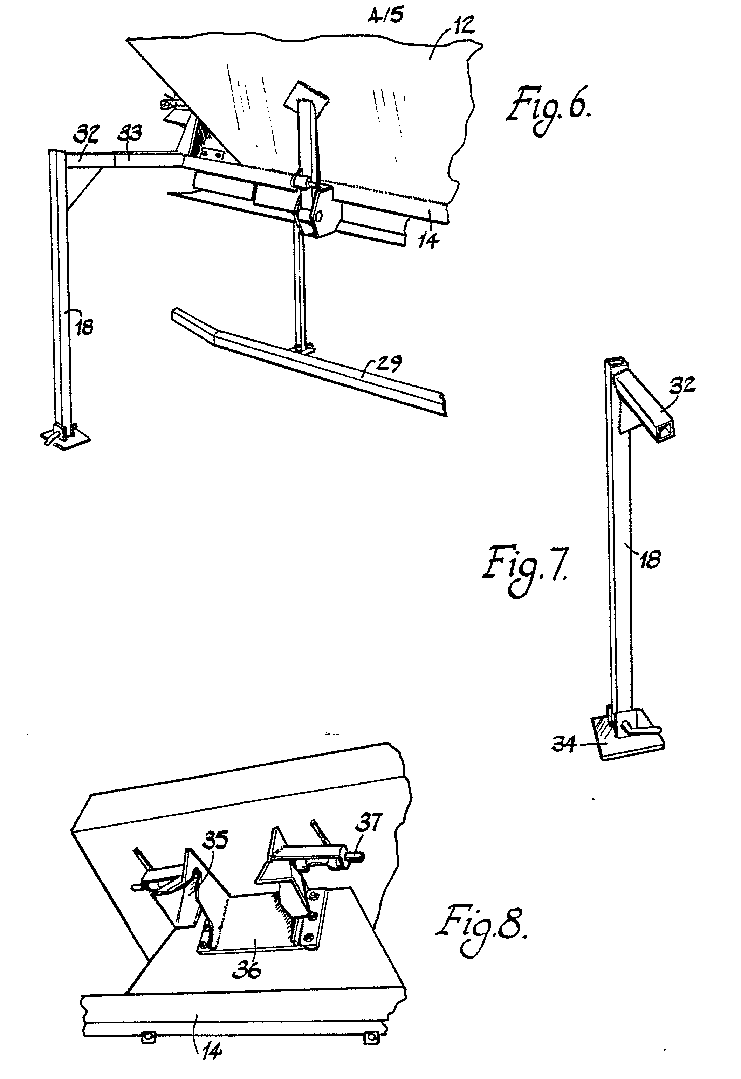

Figure 6 shows the front end of the vehicle body 12 and the front legs 18. The guide bar 29 is also shown.

Figure 7 shows one of the front legs. This is of generally L-shaped configuration having at its upper end a lateral portion 32 engageable in a square tubular extension 33 which projects laterally from the sub frame 14 of the body. As shown in Figure 2 the body 12 when in its free supported position is at an angle inclined to the horizontal and it is therefore necessary for the portion 32 of the leg 18 to be angled with respect to the plane of the L of such leg. This is apparent in Figure 7.

The lower end of each leg has a removable foot 34. This may be connected by a pivot so as to accomodate unevenness in the ground. Provision may be made for adjusting the position of this relatively to the leg.

Other forms of front leg may be used. Round or other section tube may be used in place of the square section shown. Alternative engagement arrangements may include legs engaging into vertical sockets provided on the body. A slight outward inclination is an advantage in conferring stability.

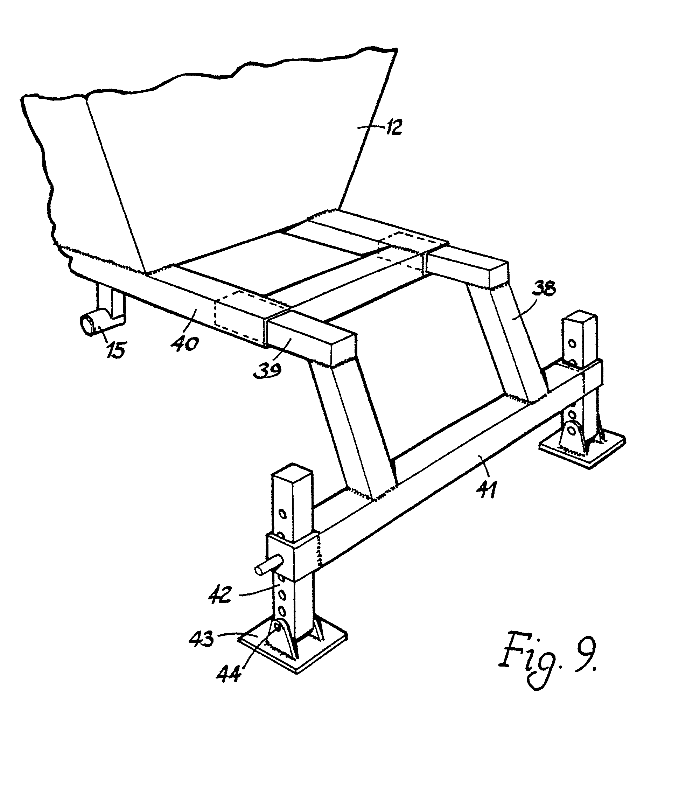

Figure 8 shows the socket arrangement with which the ram 16 on the vehicle engages the front of the body. The ram is of generally cylindrical form having a pair of diametrically opposite outwardly projecting horizontal pins which can engage the respective sockets 35 indicated in Figure 8. The sockets are flared as indicated at their lower ends and terminate at their upper ends in part circular journals to accomodate these respective pins. The sockets 35 are interconnected by a plate 36 secured to the vehicle sub frame 14.

To lock the pins on the ram 18 in the respective sockets 35 there are releasable spring loaded locking bars 37 which are mounted on the respective sockets 35. Conveniently these are of the kind comprising a straight locking bar passing into a hollow interior of the pin on the ram.

By means of the ram the normal tipping action of the vehicle body can be carried out and it is also used during the dismounting operation.

With reference to Figures 1 and 2 the dismounting of a vehicle body can be carried out as follows. The vehicle is first reversed towards the support structure 17 and the guide bar 29 is used to facilitate this. When the rear wheels of the vehicle come to rest against the abutment plates of the support structure the vehicle is stopped. Next any hydraulic connections between the vehicle body and the vehicle chassis are disconnected. Conveniently self closing couplings are used to avoid the necessity for subsequent bleeding of the system.

The pivot at 15 is next released by removal of the pivot bar.

The ram 16 is next used to raise the front of the body 12 to a height at which the front legs 18 can be fitted. In the process of raising the front of the body the pivot 15 is released and the rear of the sub frame 14 of the body comes to rest on the trunnions of the support structure 17. As shown in Figure 2 the body is completely clear of the chassis at this stage except for the ram 16. After fitting of the front legs 18 probably with their lower ends clear of the ground the ram 16 is lowered until the front legs come into contact with the ground and take the weight of the front of the body 12. The locking bars of the ram pins are released so that further lowering of the ram disengages it from the sockets on the front of the body. It is now possible to drive the chassis away leaving the body supported on the front legs 18 and on the rear support structure 17.

Instead of lowering the ram to disengage the forward end of the body, the hydraulic ram may be released, for example by withdrawing locking pins or other arrangements.

Mounting of the body onto another chassis is carried out by the reverse procedure involving raising of the ram until its pins engage with the respective sockets at the front of the body. The ram is raised still further until the front legs 18 can be removed. The ram is now lowered and as this takes place the sockets of the pivot will rest in the trunnions of the vehicle chassis and when this occurs the bars engaging in the trunnions on the support structure 17 will have become disengaged. Further lowering of the body into the normal travelling position takes place by means of the ram. The pivot bar 15 is now re-engaged and the hydraulic connections are recoupled.

The vehicle can now be driven away with the vehicle body mounted on it.

Figure 9 shows an alternative arrangement which includes a support structure 38 which is removably attached to the rear of the vehicle body. This structure 38 includes a pair of generally horizontally directed members 39 which are detachably engaged in sockets 40 formed at the rearmost end of the sub frame of the vehicle body. The members 39 are connected to a transverse member 41 by respective arms and the member 41 has a pair of spaced adjustable legs 42. As shown the legs are of square shape and engage in corresponding sockets in the ends of the transverse member 41. On the lower end of each leg 42 is a foot plate 43 connected by a pivot 44.

With this arrangement the support structure is attached to the rear end of the body 12 before the forward end is raised. As the body is subsequently raised, it pivots about the pivot 15 until the foot plates 43 contact the ground.

The pivots 15 are disengaged and the continued raising of the body is fascilitated by the pivots 44 incorporated between the legs 42 and foot plates 43. This arrangement lacks the means for accurately locating the vehicle in relation to the body for remounting purposes, but this may be acceptable for instance in circumstances in which the body is mounted and dismounted relatively infrequently.

In a further alternative arrangement the structure of Figure 9 is replaced by two separate legs engaging in respective body sockets and carrying respective foot plates 43 similar to those shown in Figure 9.

Leg height can be adjusted both at the front and at the rear to accomodate uneveness of the ground and to enable the legs to be used on vehicle bodies of different lengths and proportions.

The invention is applicable not only to vehicles which have been designed for this purpose but existing vehicles can be converted by the addition of respective sockets for the front legs and pivot bars for the engagement onto the support structure 17. The invention is applicable to many types of vehicle chassis and body combinations.

It is possible to use external means to raise the front of the body in place if the ram which is a normal part of the vehicle equipment in the version shown.

Many of the parts of the support structure are adjustable to accommodate different vehicle body sizes and proportions.

Provision on the ram on the vehicle may be made to assist engagement of the pins with the respective sockets and this may involve spring loading the ram about its lower pivot at which it is connected to the vehicle chassis 10.

The vehicle body would normally be loaded and unloaded in empty condition but different body weights may involve adjustment of the rear support structure since a loaded body will depress the springs of the vehicle more than an empty one.

The front legs 18 may be in the form of hydraulic jacks and in this example would be used to raise the front of the body in place of the ram 16 on the vehicle.

In an alternative arrangement the pivot position at which the vehicle body rests on the support structure 17 may be forward of the pivot 15 which normally connects the tipping body 12 to the chassis 10.

## CLAIMS

1. An interchangeable vehicle body arrangement, applicable to a vehicle having a wheeled chassis, a body engageable on the chassis about a pivot near the rear end of the chassis, means for engagement with the body to lift the forward end thereof, characterised by a support arranged to be-positioned at or near the rear of the vehicle with pivot means at a position spaced from the said body to chassis pivot, said support having a locating means thereon to engage the body at or near the rear end thereof and support members near the forward end of the vehicle body on which said forward end can be supported clear of the chassis.

2. An arrangement as claimed in claim 1 in which the pivot between the body and the chassis includes a removable element enabling disconnection of the pivot and a support whereby the body can be supported on the chassis without said removable element.

3. An arrangement as claimed in claim 1 or claim 2 in which the support arranged to be positioned at or near the rear of the vehicle includes said location means arranged to be engaged with a part on the vehicle body as it is lowered thereon to said location meansserving as a pivot whereby the body can pivot relatively to the support.

4. An arrangement as claimed in claim 3 in which said support comprises one or a pair of upright support members which can engage respective elements on the vehicle body, these support members being adjustable in height.

5. An arrangement as claimed in claim 1 in which the support has locating means detachably engageable with the body and the support also incorporates said pivot means.

6. An arrangement as claimed in claim 1 in which the pivot means comprises a pivot connecting a leg of the structure with a foot thereof.

7. An arrangement as claimed in any one of the preceding claims wherein a vehicle wheel alignment guide is provided.

8. An arrangement as claimed in any one of the preceding claims wherein vehicle wheel abutments are provided.

9. An arrangement as claimed in claim 8 in which the wheel abutments are connected to the support for the rear of the vehicle body.

10. An arrangement as claimed in any one of the preceding claims in which the support for the rear of the vehicle body is adjustable in height.

11. An arrangement as claimed in any one of the preceding claims wherein the support members for the forward end of the vehicle body are adjustable in height.

12. An arrangement as claimed in claim 11 wherein the support members for the forward end of the vehicle body are adjustable jacks.

13. An arrangement as claimed in any one of the preceding claims in which the means for lifting the forward end of the body comprises a ram mounted on the vehicle chassis and releasably engaged with the body.

14. An arrangement as claimed in any one of claims 1 to 12 wherein the means for lifting the forward end of the body comprises one or more jacks external to the vehicle.

15. A system of interchanging vehicle bodies on a chassis applicable to a vehicle having a wheeled chassis, a body engageable on the chassis about a pivot near the rear end of the chassis, and means for lifting the forward end of the body, the system for removing the body from the chassis comprising releasing the pivot connecting the body with the chassis, positioning a support at or near the rear of the vehicle, raising the forward end of the body by the said means, allowing the rear of the body to rest on the support, pivot means enabling the body to pivot relatively to the support, further raising the body at its forward end to lift the body clear of the rear end of the chassis, placing support members under the front of the body, disengaging the forward end of the body from said means so that it rests on the support members, and then removing the vehicle chassis from below the body, the loading of a body onto a chassis being by the reverse procedure.

16. An arrangement according to any one of the preceding claims wherein the pivot means is detachably mounted relatively to the body.

17. A system as claimed in claim 15 in which the body is located on support at or near the rear end through the pivot means whereby the body can pivot relatively to the support.

18. A system as claimed in claim 15 in which the body is engaged with the support at or near the rear end prior to raising the forward end of the body and when the support engages the ground, further raising of the forward end releases the said pivot between the body and the chassis and further pivoting is permitted through the pivot means which is incorporated in the said support.

19. An interchangeable vehicle body arrangement substantially as hereinbefore described with reference to and as shown in the accompanying drawings.

20. A system for interchanging vehicle bodies on a chassis substantially as hereinbefore described with reference to and as shown in the accompanying drawings.

Fig.1.

Fig.2.

215

12

24

23

22

15
21

25

27

28

10

19

31

29

*Fig.3.*

12

24

23

15
21

22

14

25

10

27

28

29

*Fig.4.*

Fig.5

0076662

4/5

Fig. 6.

Fig. 7.

Fig. 8.

Fig. 9.

## DOCUMENTS CONSIDERED TO BE RELEVANT

| Category | Citation of document with indication, where appropriate, of relevant passages | Relevant to claim |
|---|---|---|
| X | GB - A - 704 550 (DEVIS)  <br> * entire document * | 1-5, 7-18 |
| A | US - A - 3 897 083 (PICKERING)  <br> * fig. 1 to 5 * | 6 |
| A | US - A - 3 623 621 (TARRANT) | |
| A | GB - A - 1 575 759 (INTERPAR) | |

**CLASSIFICATION OF THE APPLICATION (Int. Cl. ³)**

B 60 P    1/64

F 16 M    11/20

**TECHNICAL FIELDS SEARCHED (Int.Cl. ³)**

B 60 P    1/00

F 16 M    11/00

B 60 S    9/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 09-12-1982 | LUDWIG |

EPO Form 1503.1  06.78